# EUROPÄISCHE PATENTSCHRIFT

(11) **EP 3 263 617 B1**
(45) Veröffentlichungstag und Bekanntmachung des Hinweises auf die Patenterteilung: **25.12.2019**
(21) Anmeldenummer: 16176311.5
(22) Anmeldetag: 27.06.2016
(51) Int. Cl.: C08G 18/71, C07F 7/18, C08G 18/75, C08G 18/80, C08G 18/22, C08G 18/24, C08G 18/32, C08G 18/38

(54) **ALKOXYSILAN-FUNKTIONALISIERTE UND ALLOPHANAT-FUNKTIONALISIERTE URETHANE**
ALKOXYSILANE- FUNCTIONALIZED AND ALLOPHANATE-FUNCTIONALIZED URETHANES
URÉTHANE FONCTIONNALISÉ PAR UN ALKOXYSILANE ET UN ALLOPHANATE

(43) Veröffentlichungstag der Anmeldung: 03.01.2018
(73) Patentinhaber: Evonik Operations GmbH, 45128 Essen (DE)
(72) Erfinder: STACHE, Wiebke, 45699 Herten (DE); UNKELHÄUSSER, Tobias, 48249 Dülmen (DE); LILIENTHAL, Annegret, 46282 Dorsten (DE); BAUER, Tina, 45894 Gelsenkirchen (DE)
(74) Vertreter: Evonik Patent Association

(56) Entgegenhaltungen:
- US-A1- 2010 247 929

## Beschreibung

Die vorliegende Erfindung betrifft Alkoxysilan-funktionalisierte und Allophanat-funktionalisierte Urethane, Verfahren zur ihrer Herstellung, diese enthaltende Beschichtungsmittel und ihre Verwendung.

Polyurethane haben sich seit vielen Jahrzehnten als hochwertige Bausteine für Lack-, Klebstoff-, Dichtstoff- und Kunststoffsysteme erwiesen. Dabei können zusätzliche Alkoxysilangruppen hier eine wichtige Rolle z. B. in Hinblick auf Netzwerkdichte, Chemikalienbeständigkeit und Kratzfestigkeit spielen, in erster Linie durch die Ausbildung von Siloxan- und Polysiloxanstrukturen.

Moleküle, die sowohl über Alkoxysilangruppen verfügen, als auch Isocyanatgruppen aufweisen, bieten die Möglichkeit, die als Reaktionsprodukte resultierende Funktionalitäten, Siloxane und Polyurethangruppen, durch eine Komponente einzufügen. Auch solche Substanzen sind schon lange in Gebrauch, z. B. in Form von Isocyanatoalkyltrialkoxysilanen.

Aus Isocyanatoalkyltrialkoxysilanen und Alkoholen hergestellte Alkoxysilan-terminierte Polyurethane sind ebenfalls bekannt und werden beispielsweise für die Herstellung hochvernetzter, harter Beschichtungsmitteln (z.B. WO 2013/189882) eingesetzt. Werden diese Alkoxysilan-terminierten Polyurethane jedoch als alleinige Bindemittel in Raumtemperaturhärtenden Systemen eingesetzt, so erhält man Beschichtungen mit nur mäßiger Härte.

Allophanat-haltige Bindemittel sind lange bekannt. Auch Alkoxysilan-funktionalisierte Allophanate sind bekannt. Hier gilt es verschiedene Typen zu unterscheiden, die im Folgenden dargestellt werden, aber weder in der Struktur noch der Anwendung der erfindungsgemäßen Alkoxysilan-funktionalisierten Allophanate entsprechen.

So werden die in WO2008/043722 beschriebenen Allophanate III (1) durch Umsetzung NCOterminierter allophanathaltige Polyurethane I (1) mit gegenüber Isocyanat reaktiven Alkoxysilanen II (1) (z.B. Aminoalkyltrialkoxysilan) erhalten. Die Allophanat-Gruppen befinden sich hier somit im Zentrum der Polyurethankette und die Alkoxysilanfunktion ist über die terminale Isocyanat-Gruppe im Rahmen einer Harnstoff-Funktion angebunden (Struktur III (1), Gleichung 1).

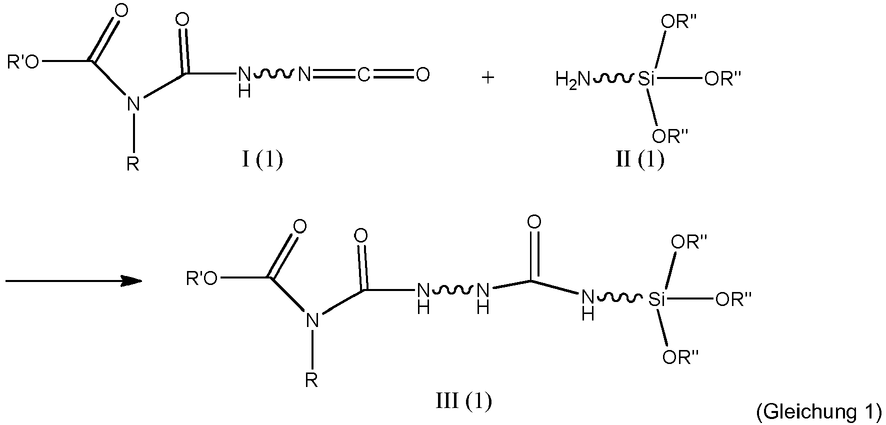

DE102005041953 beschreibt die Umsetzung eines Polyols I (2) mit einem mittleren Molekulargewicht von 3000 - 20000 g/Mol mit einem Überschuss von Isocyanatopropyltrimethoxysilan II (2), so dass es nach der Polyurethanbildung III (2) zu Bildung eines Allophanates IV (2) mit zwei Alkoxysilanfunktionen pro Allophanateinheit kommt.

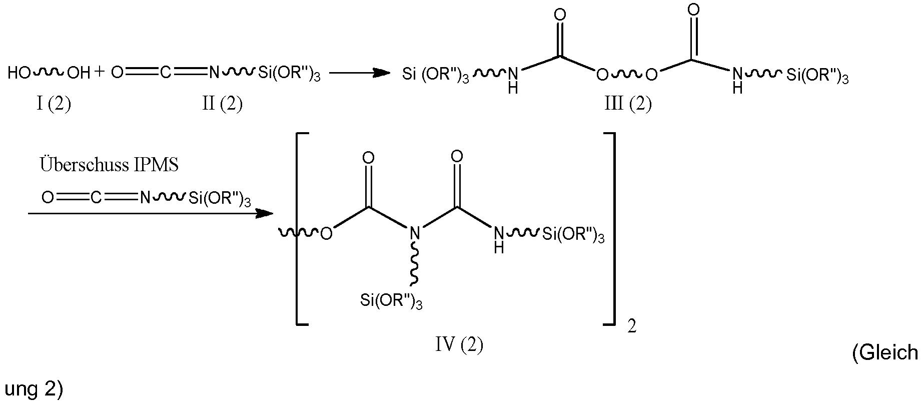

In DE102005041954 wird ein Polyurethan I (3) mit Isocyanatopropyltrimethoxysilan II (3) versetzt und so lange erhitzt bis sich Allophanatstrukturen ausbilden. In diesem Fall wird die Alkoxysilangruppe an dem terminalen Stickstoff der Allophanat-Gruppe III (3) angebaut (Gleichung 3).

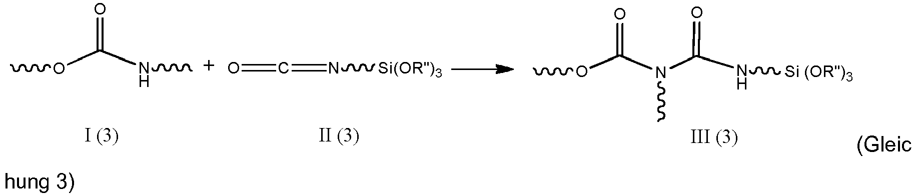

J. Kozakiewicz et al. publizierten in Progress in Organic Coatings 72 (2011) 120-130 die Umsetzung von Isocyanatopropyltrimethoxysilan I (4) mit Methanol zum entsprechenden Urethan II (4) und anschließend mit Hexamethylendiisocyanat-Trimer III (4). Bei dem hieraus resultierenden hochviskosen Allophanat IV (4) hängt die Alkoxysilanfunktion an dem tertiären, zentralen Amin der Allophanat-Gruppe (Gleichung 4).

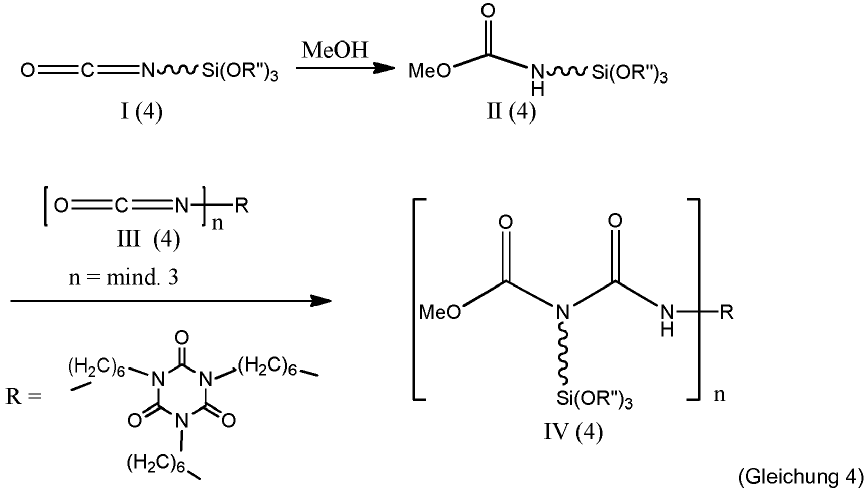

Die Allophanat-Funktion dient in der beschriebenen Anwendung als Blockierungsmittel für das Hexamethylendiisocyanat-Trimer, welches als Vernetzer für Hydroxy-funktionalisierte Polyesterpolyole eingesetzt wurde.

Auch heute besteht ein Bedarf an neuen silanhaltigen Bindemitteln, die über spezielle Eigenschaften verfügen.

Aufgabe dieser Erfindung war es, neue silanhaltige Bindemittel zugänglich zu machen, die für die Entwicklung hochvernetzter, harter Beschichtungen geeignet sind.

Diese Aufgabe wird durch Alkoxysilan-funktionalisierte und Allophanat-funktionalisierte Urethane gemäß der vorliegenden Erfindung gelöst.

Überraschenderweise wurde gefunden, dass die erfindungsgemäßen Alkoxysilan-funktionalisierten und Allophanat-funktionalisierten Urethane für die Anwendung als Lack-, Klebstoff- oder Dichtstoff geeignet sind. Insbesondere können die erfindungsgemäßen Alkoxysilan-funktionalisierte und Allophanat-funktionalisierte Urethane für die Entwicklung hochvernetzter, besonders harter Beschichtungen eingesetzt werden. Hierbei können die erfindungsgemäßen Alkoxysilan-funktionalisierte und Allophanat-funktionalisierte Urethane als alleinige Bindemittel sowohl in der Kalt- als auch Heißhärtung, eingesetzt werden.

Gegenstand der Erfindung sind Alkoxysilan-funktionalisierte und Allophanat-funktionalisierte Urethane
enthaltend das Reaktionsprodukt aus
**I.**
   A) Alkoxysilangruppen haltige Monourethane A) der Formel 1

      Rₙ(OR¹)₃₋ₙSi-R²-NH-(C=O)-OR³ Formel 1

      wobei Rₙ, R¹, R² und R³ unabhängig voneinander Kohlenwasserstoffreste mit 1-8 C-Atomen bedeuten, wobei diese linear, verzweigt oder cyclisch sein können, oder auch cyclisch ineinander übergehen können, und n gleich 0-2 bedeutet,
      und
   B) mindestens einem Diisocyanat B),
      in einem Mol-Verhältnis von A) zu B) von 1,0 : 1,5 bis 1,0 : 0,6, bevorzugt 1,15 :1 bis 0,85 : 1,
      besonders bevorzugt von 1:1,
      optional in Gegenwart mindestens eines Katalysators K),
**II.** und der anschließenden Umsetzung
   C) mit mindestens einem Diol und/oder Polyol C),
   optional in Gegenwart mindestens eines Katalysators K),
im Verhältnis der NCO-Gruppen des Reaktionsprodukts I. zu den OH-Gruppen des Diols und/oder Polyols II. C) von 1,0 : 1,5 bis 1,0 : 0,6, bevorzugt 1,15 : 1 bis 0,85 : 1, besonders bevorzugt 1 : 1.

Bevorzugter Gegenstand der Erfindung sind Alkoxysilan-funktionalisierte und Allophanat-funktionalisierte Urethane bestehend aus dem Reaktionsprodukt aus I. und II. wie oben definiert.

Bevorzugt sind Rₙ, R¹, R² und R³ gleichzeitig oder unabhängig voneinander Methyl, Ethyl, n-Propyl, iso-Propyl, n-Butyl, sec-Butyl, oder tert-Butyl.

Bevorzugt ist n = 0.

R¹ und R³ sind bevorzugt gleichzeitig oder unabhängig voneinander Methyl oder Ethyl.

R² ist bevorzugt Methyl oder Propyl.

Bevorzugt sind Verbindungen mit n gleich 0, R¹ und R³ gleichzeitig oder unabhängig voneinander gleich Methyl oder Ethyl, und R² gleichzeitig oder unabhängig voneinander gleich Methyl oder Propyl.

Bevorzugt ist R³ = R¹.

Bevorzugt sind Verbindungen mit n gleich 0 und R² gleich Methyl oder Propyl, und R¹ gleich Methyl oder Ethyl und R³ = R¹.

Ganz besonders bevorzugt ist die Verbindung n gleich 0, R¹ und R³ gleich Methyl und R² gleich Propyl, N-Trimethoxysilylpropylmethylcarbamat.

Das erfindungsgemäß eingesetzte Diisocyanat B) kann ein beliebiges aliphatisches, cycloaliphatisches und/oder (cyclo)aliphatisches Diisocyanat sein. In einer bevorzugten Ausführungsform wird unter dem Begriff "(cyclo)aliphatisches Diisocyanat", wie hierin verwendet, verstanden, dass in einem Molekül gleichzeitig an einen Ring gebundene NCO-Gruppen und an einen aliphatischen Rest gebundene NCO-Gruppen vorhanden sind, wie es z. B. beim Isophorondiisocyanat der Fall ist. In einer bevorzugten Ausführungsform wird unter dem Begriff "cycloaliphatisches Diisocyanat", wie hierin verwendet ein Diisocyanat verstanden, das nur direkt am cycloaliphatischen Ring gebundene NCO-Gruppen aufweist, z. B. Diisocyanatodicyclohexylmethan (H12MDI).

Zur Verwendung als Diisocyanat B) geeignete aliphatische Diisocyanate umfassen lineare und/oder verzweigte Alkylenreste mit bevorzugt 3 bis 16 Kohlenstoffatome, bevorzugter 4 bis 12 Kohlenstoffatome. Geeignete cycloaliphatische oder (cyclo)aliphatische Diisocyanate umfassen einen Cycloalkylenrest mit bevorzugt 4 bis 18 Kohlenstoffatomen, bevorzugter 6 bis 15 Kohlenstoffatomen. Beispiele geeigneter Disocyanate umfassen Cyclohexandiisocyanat, Methylcyclohexandiisocyanat, Ethylcyclo-hexandiisocyanat, Propylcyclohexandiisocyanat, Methyldiethylcyclohexandiisocyanat, Propandiisocyanat, Butandiisocyanat, Pentandiisocyanat, Hexandiisocyanat, Heptandiisocyanat, Octandiisocyanat, Nonandiisocyanat, wie 4-Isocyanatomethyl-1,8-octandiisocyanat (TIN), Dekandi- und triisocyanat, Undekandi- und - triisocyanat, Dodecandi- und -triisocyanate. Ebenfalls geeignet sind 4-Methyl-cyclohexan-1,3-diisocyanat, 2-Butyl-2-ethylpentamethylen-diisocyanat, 3(4)-Isocyanatomethyl-1-methylcyclohexylisocyanat, 2-Isocyanatopropylcyclohexyl-isocyanat, 2,4'-Methylenbis(cyclohexyl)diisocyanat und/oder 1,4-Diisocyanato-4-methyl-pentan.

Bevorzugte Diisocyanate B) sind Isophorondiisocyanat (IPDI), Hexamethylendiisocyanat (HDI), 2,2'-Dicyclohexylmethandiisocyanat (2,2'-H12MDI), 2,4'-Dicyclohexylmethandiisocyanat (2,4'-H12MDI), 4,4'-Dicyclohexylmethandiisocyanat (4,4'-H12MDI), 2-Methylpentandiisocyanat (MPDI), 2,2,4-Trimethylhexamethylendiisocyanat (2,2,4-TMDI), 2,4,4-Trimethylhexamethylendiisocyanat (2,4,4-TMDI), Norbornandiisocyanat (NBDI), Methylendiphenyldiisocyanat (MDI), Toluidindiisocyanat (TDI), Tetramethylxylylendiisocyanat (TMXDI), einzeln oder Mischungen davon.

In einer besonders bevorzugten Ausführungsform ist das Diisocyanat B) IPDI und/oder 4,4'-H12MDI und/oder HDI und/oder ein Gemisch von 2,2,4-TMDI und 2,4,4-TMDI.

Als Diole C) und Polyole C) werden z. B. Ethylenglykol, 1,2-, 1,3-Propandiol, Diethylen-, Dipropylen-, Triethylen-, Tetraethylenglykol, 1,2-, 1,4-Butandiol, 1,3-Butylethylpropandiol, 1,3-Methylpropandiol, 1,5-Pentandiol, Bis-(1,4-hydroxymethyl)cyclohexan (Cyclohexandimethanol), Glycerin, Hexandiol, Neopentylglykol, Trimethylolethan, Trimethylolpropan, Pentaerythrit, Bisphenol A, B, C, F, Norbornylenglykol, 1,4-Benzyldimethanol, -ethanol, 2,4-Dimethyl-2-ethylhexan-1,3-diol, 1,4- und 2,3-Butylenglykol, Di-β-hydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.0^{2,6}]decan (Dicidol), 2,2-Bis-(4-hydroxycyclohexyl)propan, 2,2-Bis-[4-(β-hydroxyethoxy)-phenyl]propan, 2-Methyl-propandiol-1,3, 2-Methylpentandiol-1,5, 2,2,4(2,4,4)-Trimethylhexandiol-1,6, Hexantriol-1,2,6, Butantriol-1,2,4, 2,2-Dimethylpropandiol-(1,3), Heptandiol-(1,7), Octa-decen-9,10-diol-(1,12), Thiodiglykol, Octadecandiol-(1,18), 2,4-Dimethyl-2-propylheptandiol-(1,3), Tris-(β-hydroxyethyl)isocyanurat, Mannit, Sorbit, Polypropylenglykole, Polybutylenglykole, Xylylenglykol oder Hydroxypivalinsäureneopentylglykolester, allein oder in Mischungen, eingesetzt.

Besonders bevorzugte Diole C) und Polyole C) sind Ethylenglykol, Triethylenglykol,1,4-Butandiol, 1,2-Propandiol, 1,5-Pentandiol, 1,6-Hexandiol, Cyclohexandimethanol, Decandiol, 1,12-Dodecandiol, 2,2,4-Trimethylhexandiol-1,6, 2,4,4-Trimethylhexandiol-1,6, 2,2-Dimethyl-butandiol-1,3, 2-Methyl-pentandiol-2,4, 3-Methyl-pentandiol-2,4, 2,2,4-Trimethyl-pentandiol-1,3, 2-Ethylhexandiol-1,3, 2,2-Dimethylhexandiol-1,3, 3-Methylpentandiol-1,5, 2-Methyl-pentandiol-1,5, Trimethylolpropan, 2,2-Dimethylpropandiol-1,3 (Neopentylglykol), Hydroxypivalinsäureneopentylglykolester und cis/trans-1,4-Cyclohexandiol allein oder in Mischungen.

Ganz besonders bevorzugte Diole C) und Polyole C) sind 1,5-Pentandiol, 1,6-Hexandiol, 1,12-Dodecandiol, 2,2,4-Trimethylhexandiol-1,6, 2,4,4-Trimethylhexandiol-1,6, 2,2-Dimethyl-butandiol-1,3, 2-Methyl-pentandiol-2,4, 3-Methyl-pentandiol-2,4, 2,2,4-Trimethyl-pentandiol-1,3, 2-Ethylhexandiol-1,3, 2,2-Dimethylhexandiol-1,3, 3-Methylpentandiol-1,5, 2-Methyl-pentandiol-1,5, 2,2-Dimethylpropandiol-1,3 (Neopentylglykol) und cis/trans-1,4-Cyclohexandiol, allein oder in Mischungen.

Als Komponente C) werden bevorzugt hydroxylgruppenhaltige Polyester, Polyether, Polyacrylate, Polycarbonate und Polyurethane mit einer OH-Zahl von 20 bis 500 mg KOH/g und einer mittleren Molmasse von 250 bis 6000 g/mol eingesetzt. Besonders bevorzugt werden im Rahmen der vorliegenden Erfindung Hydroxylgruppen-haltige Polyester oder Polyacrylate mit einer OH-Zahl von 50 bis 250 mg KOH/g und einem mittleren Molekulargewicht von 500 bis 6000 g/mol eingesetzt. Die Hydroxylzahl (OH-Zahl, OHZ) wird bestimmt nach DIN 53240-2. Bei diesem Verfahren wird die Probe mit Essigsäureanhydrid in Gegenwart von 4-Dimethylaminopyridin als Katalysator umgesetzt, wobei die Hydroxylgruppen acetyliert werden. Dabei entsteht pro Hydroxylgruppe ein Molekül Essigsäure, während die anschließende Hydrolyse des überschüssigen Essigsäureanhydrids zwei Moleküle Essigsäure liefert. Der Verbrauch an Essigsäure wird titrimetrisch aus der Differenz zwischen Hauptwert und einem parallel durchzuführenden Blindwert ermittelt. Das Molekulargewicht wird bestimmt mittels Gelpermeationschromatographie (GPC). Die Charakterisierung der Proben erfolgt in Tetrahydrofuran als Eluent nach DIN 55672-1.

Als Komponente C) eingesetztes hydroxylgruppenhaltiges (Meth)acryl-Copolymerisat können Harze mit einer Monomerzusammensetzung, wie sie z. B. in WO 93/15849 (S. 8, Zeile 25 bis S. 10, Zeile 5, beschrieben sind, verwendet werden. Dabei sollte die durch anteilige Verwendung von (Meth)acrylsäure als Monomer einzustellende Säurezahl des (Meth)acryl-Copolymerisates 0 bis 30, vorzugsweise 0 bis 15 mg KOH/g betragen. Das zahlenmittlere Molgewicht (ermittelt durch Gelpermeationschromatographie gegen einen Polystyrolstandard) des (Meth)acryl-Copolymerisates beträgt vorzugsweise 2000 bis 20000 g/mol, die Glasübergangstemperatur beträgt vorzugsweise - 40°C bis + 60 °C und der durch anteilige Verwendung von Hydroxyalkyl(meth)acrylaten einzustellende Hydroxylgehalt der erfindungsgemäß zu verwendenden (Meth)acryl-Copolymerisate beträgt vorzugsweise 20 bis 500 mg KOH/g, besonders bevorzugt 50 bis 250 mg KOH/g.

Erfindungsgemäß als Komponente C) geeignete Polyesterpolyole sind Harze mit einer Monomerzusammensetzung aus Di- und Polycarbonsäuren und Di- und Polyolen, wie sie in der WO 93/15849 beschrieben sind. Als Polyesterpolyole können auch Polyadditionsprodukte von Caprolacton an niedermolekulare Di- und Triole, wie sie z. B. unter der Bezeichnung CAPA® (Perstorp) erhältlich sind, eingesetzt werden. Das rechnerisch bestimmte zahlenmittlere Molgewicht beträgt vorzugsweise 500 bis 5000 g/mol, besonders bevorzugt 800 bis 3000 g/mol, die mittlere Funktionalität beträgt vorzugsweise 2,0 bis 4,0, bevorzugt 2,0 bis 3,5.

Als erfindungsgemäß als Komponente C) zu verwendende urethan- und estergruppenhaltige Polyole kommen prinzipiell auch solche zum Einsatz, wie sie in EP 140 186 beschrieben sind. Bevorzugt sind urethan- und estergruppenhaltige Polyole, zu deren Herstellung HDI, IPDI, Trimethylhexamethylendiisocyanat (TMDI) oder Dicyclohexylmethandiisocyanat (H12MDI) verwendet werden, eingesetzt. Das zahlenmittlere Molgewicht beträgt vorzugsweise 500-5000 g/mol, die mittlere Funktionalität liegt insbesondere im Bereich von 2,0 - 3,5.

Als Komponente C) eignen sich Diole und Polyole, die weitere funktionelle Gruppen enthalten. Hierbei handelt es sich um die an sich bekannten linearen oder verzweigten hydroxylgruppenhaltigen Polyester, Polycarbonate, Polycaprolactone, Polyether, Polythioether, Polyesteramide, Polyurethane oder Polyacetale. Sie weisen vorzugsweise ein zahlenmittleres Molekulargewicht von 134 bis 3 500 g/mol auf. Bevorzugt sind lineare hydroxylgruppenhaltige Polyester - Polyesterpolyole - oder Gemische solcher Polyester. Sie werden z. B. durch Umsetzung von Diolen mit unterschüssigen Mengen an Dicarbonsäuren, entsprechenden Dicarbonsäureanhydriden, entsprechenden Dicarbonsäureestern von niederen Alkoholen, Lactonen oder Hydroxycarbonsäuren hergestellt.

Zur Herstellung der Polyesterpolyole geeignete Diole sind neben den oben genannten Diolen auch 2-Methylpropandiol, 2,2-Dimethylpropandiol, Diethylenglykol, Dodecandiol-1,12, 1,4-Cyclohexandimethanol und 1,2- und 1,4-Cyclohexandiol.

Zur Herstellung der Polyesterpolyole geeignete Dicarbonsäuren oder Derivate können aliphatischer, cycloaliphatischer, aromatischer und/oder heteroaromatischer Natur sein und gegebenenfalls, z. B. durch Halogenatome, substituiert und/oder ungesättigt sein.

Zu den bevorzugten Dicarbonsäuren oder Derivaten zählen Bernstein-, Adipin-, Kork-, Azelain- und Sebacinsäure, 2,2,4 (2,4,4)-Trimethyladipinsäure, Phthalsäure, Phthalsäureanhydrid, Isophthalsäure, Terephthalsäure, Terephthalsäuredimethylester, Tetrahydrophthalsäure, Maleinsäure, Maleinsäureanhydrid und dimere Fettsäuren.

Geeignete Polyesterpolyole sind auch solche, die sich in bekannter Weise durch Ringöffnung aus Lactonen, wie epsilon-Caprolacton, und einfachen Diolen als Startermoleküle herstellen lassen.

Die zur Herstellung der Polyesterpolyole verwendeten Diole und Dicarbonsäuren bzw. deren Derivate können in beliebigen Mischungen eingesetzt werden.

Selbstverständlich können auch Mischungen der vorab beschriebenen Komponenten C) eingesetzt werden.

Das Verhältnis der NCO-Gruppen des Reaktionsprodukts I. zu den OH-Gruppen des Diols und/oder Polyols II. C) variiert von 1,0 : 1,5 bis 1,0 : 0,6, bevorzugt 1,15 : 1 bis 0,85 : 1, besonders bevorzugt 1 : 1.

Gegenstand der Erfindung ist auch ein Verfahren zur Herstellung von Alkoxysilan-funktionalisierten und Allophanat-funktionalisierten Urethanen durch Umsetzung von
**I.**
   A) Alkoxysilangruppen haltige Monourethane A) der Formel 1

      Rₙ(OR¹)₃₋ₙSi-R²-NH-(C=O)-OR³ Formel 1

      wobei Rₙ, R¹, R² und R³ unabhängig voneinander Kohlenwasserstoffreste mit 1-8 C-Atomen bedeuten, wobei diese linear, verzweigt oder cyclisch sein können, oder auch cyclisch ineinander übergehen können, und n gleich 0-2 bedeutet,
      und
   B) mindestens einem Diisocyanat B),
      in einem Mol-Verhältnis von A) zu B) von 1,0 : 1,5 bis 1,0 : 0,6, bevorzugt 1,15 :1 bis 0,85 :1,
      besonders bevorzugt von 1:1
      optional in Gegenwart mindestens eines Katalysators K),
**II.** und der anschließenden Umsetzung
   C) mit mindestens einem Diol und/oder Polyol C),
   optional in Gegenwart mindestens eines Katalysators K),
   im Verhältnis der NCO-Gruppen des Reaktionsprodukts I. zu den OH-Gruppen des Diols und/oder Polyols II. C) von 1,0 : 1,5 bis 1,0 : 0,6, bevorzugt 1,15 : 1 bis 0,85 : 1, besonders bevorzugt 1 : 1,
Die Herstellung der erfindungsgemäßen Alkoxysilan-funktionalisierten und Allophanat-funktionalisierten Urethane erfolgt in zwei Schritten. In Schritt I. wird das Monourethan A) mit dem Diisocyanat B) umgesetzt, woraus das Reaktionsprodukt I. resultiert. Danach erfolgt Schritt II. bei dem das Reaktionsprodukt I. unter Bildung von Urethanfunktionen mit Diolen und/oder Polyolen umgesetzt wird.

Im Allgemeinen erfolgen Schritt I. und II. lösungsmittelfrei oder unter Verwendung von nichtprotischen Lösemitteln, wobei die Umsetzung diskontinuierlich oder kontinuierlich erfolgen kann. Die Reaktionen von Schritt I. und II. werden durchgeführt in geeigneten Aggregaten, z.B. Rührkessel, Extruder, Statikmischern, Knetkammern. Die Reaktionen von Schritt I. und II. können bei Raumtemperatur, das heißt bei Temperaturen im Bereich von 15 bis 40 °C, insbesondere im Bereich von 15 bis 25 °C, durchgeführt werden. Bevorzugt werden jedoch höhere Temperaturen im Bereich 80 bis 220 °C, insbesondere im Bereich von 80 bis 120 °C verwendet. Die Reaktionen von Schritt I. und II. werden unter Ausschluss von Wasser durchgeführt. Bevorzugt werden Die Reaktionen von Schritt I. und II. lösemittelfrei durchgeführt.

Zur Beschleunigung der Die Reaktionen von Schritt I. und II. können vorteilhaft in der Urethanchemie bekannte Katalysatoren K), z.B. Metallorganische Verbindungen, wie Zinn oder Zink haltige Verbindungen, Salze, wie z.B. Zn(II)chlorid und/oder Basen verwendet werden. Geeignet sind zum Beispiel Sn-, Bi-, Zn- und andere Metallcarboxylate wie z.B. Dibutylzinndilaurat, Zinnoctoat, Zink(II)ethylhexanoat, Bismuthneodecanoat, tert.-Amine wie beispielsweise 1,4-Diazabicyclo[2.2.2]octan (DABCO), 1,8-Diazabicyclo[5.4.0]undec-7-en (DBU), 1,5-Diazabicyclo[4.3.0]non-5-en (DBN), Triethylamin, Amidine und Guanidine, sowie quarternäre Ammoniumsalze, bevorzugt Tetralkylammoniumsalze und/oder quarternäre Phosphoniumsalze .

Als Katalysatoren K) kommen auch Metallacetylacetonate in Frage. Beispiele dafür sind Zinkacetylacetonat, Lithiumacetylacetonat, Eisenacetylacetonat und Zinnacetylacetonat, allein oder in Mischungen. Als Katalysatoren kommen außerdem quarternäre Ammoniumacetylacetonate oder quarternäre Phosphoniumacetylacetonate in Frage.

Bevorzugt werden für die Reaktion von Schritt I. Zinkacetylacetonat oder Zinkethylhexanoat eingesetzt.

Gegenstand der Erfindung sind auch Beschichtungsmittel, Klebstoffe, oder Dichtstoffe, enthaltend oder bestehend aus:
Alkoxysilan-funktionalisierte und Allophanat-funktionalisierte Urethane enthaltend das Reaktionsproduktes aus
**I.**
   A) Alkoxysilangruppen haltige Monourethane A) der Formel 1

      Rₙ(OR¹)₃₋ₙSi-R²-NH-(C=O)-OR³ Formel 1

      wobei Rₙ, R¹, R² und R³ unabhängig voneinander Kohlenwasserstoffreste mit 1-8 C-Atomen bedeuten, wobei diese linear, verzweigt oder cyclisch sein können, oder auch cyclisch ineinander übergehen können, und n gleich 0-2 bedeutet,
      und
   B) mindestens einem Diisocyanat B),
      in einem Mol-Verhältnis von A) zu B) von 1,0 : 1,5 bis 1,0 : 0,6, bevorzugt 1,15 :1 bis 0,85 :1,
      besonders bevorzugt von 1:1,
      optional in Gegenwart mindestens eines Katalysators K),
**II.** und der anschließenden Umsetzung
   C) mit mindestens einem Diol und/oder Polyol C),
   optional in Gegenwart mindestens eines Katalysators K),
im Verhältnis der NCO-Gruppen des Reaktionsprodukts I. zu den OH-Gruppen des Diols und/oder Polyols II. C) von 1,0 : 1,5 bis 1,0 : 0,6, bevorzugt 1,15 : 1 bis 0,85 : 1, besonders bevorzugt 1 : 1.

Gegenstand der Erfindung ist auch die Verwendung der erfindungsgemäßen Alkoxysilan-funktionalisierten und Allophanat-funktionalisierten Urethane in Beschichtungszusammensetzungen und Lackzusammensetzungen für Metall-, Glas, Kunststoff-, Holz-, MDF- (Middle Density Fiber Boards) oder Ledersubstrate oder sonstigen hitzeresistenten Untergründen.

Gegenstand der Erfindung ist auch die Verwendung der erfindungsgemäßen Alkoxysilan-funktionalisierten und Allophanat-funktionalisierten Urethane in Klebstoffzusammensetzungen für Verklebungen von Metall-, Kunststoff-, Glas-, Holz-, MDF- oder Ledersubstraten oder sonstigen hitzeresistenten Untergründen.

Die vorliegende Erfindung wird weiterhin durch die folgenden nicht beschränkenden Beispiele veranschaulicht, denen weitere Merkmale, Ausführungsformen, Aspekte und Vorteile der vorliegenden Erfindung entnommen werden können.

### Beispiele:

### Einsatzstoffe:

**Vestanat® EP-UPMS:** Trimethoxysilylpropylmethylcarbamat (Evonik Resource Efficiency GmbH)
**Vestanat® IPDI:** Isophorondiisocyanat (Evonik Resource Efficiency GmbH)
**Vestanat® EP Cat 11 B:** Tetraethylammoniumbenzoat in Butanol (Evonik Resource Efficiency GmbH)
**Tegoglide® 410:** Gleit und Antiblocking Aditiv auf Basis eines Polyethersiloxan Copolymers (Evonik Resource Efficiency GmbH)

### 1. Herstellung

Alkoxysilan-funktionalisiertes und Allophanat-funktionalisiertes Urethan 1
   I. Es wurden 36,9 g Vestanat® EP-UPMS, 0,04 g Zink(II)ethylhexanoat und 34,7 g Vestanat® IPDI in einem Dreihalskolben mit Rückflusskühler vorgelegt, mit Stickstoff abgedeckt und unter Rühren auf 100 °C erhitzt. Nach 12-stündigem Erhitzen wurde ein NCO-Gehalt von 9,33% erhalten.
   II. Das erhaltene Allophanat wurde abgekühlt, mit 8,37 g Pentandiol und 0,01% Dibutylzinndilaurat (DBTL) versetzt und bei 60-65°C 17 h gerührt bis der NCO-Gehalt von <0,1% erreicht wurde, wobei nach ca. 3 h zwecks Viskositätserniedrigung 20 g Butylacetat hinzugefügt wurden. Das so erhaltene Alkoxysilan-funktionalisierte und Allophanat-funktionalisierte Urethan 1 ist eine klare Flüssigkeit mit einer Viskosität von 3457 mPas (bei 23°C).
Alkoxysilan-funktionalisiertes und Allophanat-funktionalisiertes Urethan 2
   I. Es wurden 31,7 g Vestanat® EP-UPMS, 0,04 g Zink(II)ethylhexanoat und 29,8 g Vestanat® IPDI in einem Dreihalskolben mit Rückflusskühler vorgelegt, mit Stickstoff abgedeckt und unter Rühren auf 100 °C erhitzt. Nach 6-stündigem Erhitzen wurde ein NCO-Gehalt von 9,12% erhalten.
   II. Das erhaltene Allophanat wurde abgekühlt, mit 13,5 g Dodecandiol und 0,01% Dibutylzinndilaurat (DBTL) versetzt und bei 60-65°C mehrere Stunden gerührt bis der NCO-Gehalt von <0,1% erreicht wurde, dann wurde noch in der Hitze zwecks Viskositätserniedrigung 20 g 1-Methoxypropyl-2-Acetat hinzugefügt wurden. Das so erhaltene Alkoxysilan-funktionalisierte und Allophanat-funktionalisierte Urethan 2 ist eine klare Flüssigkeit mit einer Viskosität von 1902 mPas (bei 23°C).

### 2. Herstellung von Klarlacken aus den Alkoxysilan-funktionalisierten und Allophanat-funktionalisierten Urethanen als Beschichtungsmittel

Für die Formulierung der erfindungsgemäßen Klarlacke und der Vergleichsbeispiele wurden die Komponenten der in Tabelle 1 und 2 dargestellten Zusammensetzungen unmittelbar vor der Verarbeitung miteinander gemischt.

Die Viskosität der Formulierungen betrug, bestimmt als Auslaufzeit im DIN-4-Becher bei 23 °C, ca. 60 Sekunden.

**Tabelle 1: Zusammensetzung der erfindungsgemäßen Klarlacke von RT-härtenden Systemen, Angaben in Gew.-%**

| Position | | I | II |
|---|---|---|---|
| 1 | Alkoxysilan-funktionalisiertes und Allophanat-funktionalisiertes Urethan 1 | 91,24 | |
| 2 | Alkoxysilan-funktionalisiertes und Allophanat-funktionalisiertes Urethan 2 | | 99,0 |
| 3 | 1,8-Diazabicyclo[5.4.0]undec-7-en (DBU) | 0,92 | 1,0 |
| 4 | Tegoglide® 410 | 0,05 | |
| 5 | Xylol | 7,79 | |

| | | | |
|---|---|---|---|
| Auf Feststoff bezogen wurden jeweils 1,25 Gew.-% DBU eingesetzt. | | | |

**Tabelle 2: Zusammensetzung der erfindungsgemäßen Klarlacke von heiß-härtenden Systemen, Angaben in Gew.-%**

| Position | | III | IV |
|---|---|---|---|
| 1 | Alkoxysilan-funktionalisiertes und Allophanat-funktionalisiertes Urethan 1 | 98,0 | |
| 2 | Alkoxysilan-funktionalisiertes und Allophanat-funktionalisiertes Urethan 2 | | 80,5 |
| 3 | Vestanat® EP Cat 11 B | 2,0 | 1,6 |
| 4 | 1-Methoxypropyl-2-Acetat | | 17,9 |

| | | | |
|---|---|---|---|
| Auf Feststoff bezogen wurden jeweils 1,25 Gew.-% Tetraethylammoniumbenzoat eingesetzt. | | | |

### Härtung der Klarlacke

Zur Ermittlung der mechanischen Kenndaten wurden alle Lacke einer 100 µm Rakel auf phosphatierte Stahlbleche (Chemetall Gardobond 26S/60/OC) appliziert und bei unterschiedlichen Einbrennbedingungen (RT gleich Raumtemperatur 23°C Tabelle 3; 22 Minuten bei 140°C, Tabelle 4) gehärtet.

**Tabelle 3: Lackeigenschaften der Zusammensetzungen I-II nach Härtung bei RT**

| Zusammensetzung | I | II |
|---|---|---|
| Pendelhärte (König) [s] n 7 d | 188 | 154 |
| Erichsen Tiefung [mm] (EN ISO 1520) | 4 | 6 |
| MEK-Test [ASTM D 4752] (Doppelhübe, 1kg Auflagegewicht) | >150 | >150 |

Die Lackeigenschaften der Beschichtungen I und II, die die erfindungsgemäßen Alkoxysilan-funktionalisierten und Allophanat-funktionalisierten Urethane 1 oder 2 enthalten, zeigen hohe Pendelhärten und gleichzeitig hohe Flexibilität (Erichsen Tiefung) bei hoher MEK-Beständigkeit.

**Tabelle 4: Lackeigenschaften der Zusammensetzungen III - IV nach Härtung bei 140 °C (22 min)**

| Zusammensetzung | III | IV |
|---|---|---|
| Pendelhärte (König) [s] n 1 d | 203 | 177 |
| Erichsen Tiefung [mm] (EN ISO 1520) | 0,5 | 1,0 |
| MEK-Test [ASTM D 4752] (Doppelhübe, 1kg Auflagegewicht) | >150 | >150 |

Die Lackeigenschaften der Beschichtungen III und IV, die die erfindungsgemäßen Alkoxysilan-funktionalisierten und Allophanat-funktionalisierten Urethane 1 oder 2 enthalten, zeigen hohe Pendelhärten und gute Chemikalienbeständigkeit.

## Patentansprüche

1. Alkoxysilan-funktionalisierte und Allophanat-funktionalisierte Urethane
enthaltend das Reaktionsproduktes aus
**I.**
A) Alkoxysilangruppen haltige Monourethane A) der Formel 1
Rₙ(OR¹)₃₋ₙSi-R²-NH-(C=O)-OR³ Formel 1
wobei Rₙ, R¹, R² und R³ unabhängig voneinander Kohlenwasserstoffreste mit 1-8 C-Atomen bedeuten, wobei diese linear, verzweigt oder cyclisch sein können, oder auch cyclisch ineinander übergehen können, und n gleich 0-2 bedeutet,
und
B) mindestens einem Diisocyanat B),
in einem Mol-Verhältnis von A) zu B) von 1,0 : 1,5 bis 1,0 : 0,6, bevorzugt 1,15 :1 bis 0,85 :1, besonders bevorzugt von 1:1,
optional in Gegenwart mindestens eines Katalysators K),
**II.** und der anschließenden Umsetzung
C) mit mindestens einem Diol und/oder Polyol C),
optional in Gegenwart mindestens eines Katalysators K),
im Verhältnis der NCO-Gruppen des Reaktionsprodukts I. zu den OH-Gruppen des Diols und/oder Polyols II. C) von 1,0 : 1,5 bis 1,0 : 0,6, bevorzugt 1,15 : 1 bis 0,85 : 1, besonders bevorzugt 1 : 1.

2. Alkoxysilan-funktionalisierte und Allophanat-funktionalisierte Urethane nach Anspruch 1, wobei Rₙ, R¹, R² und R³ gleichzeitig oder unabhängig voneinander Methyl, Ethyl, n-Propyl, iso-Propyl, n-Butyl, sec-Butyl, oder tert-Butyl, bedeuten.

3. Alkoxysilan-funktionalisierte und Allophanat-funktionalisierte Urethane nach mindestens einem der vorherigen Ansprüche, wobei n gleich 0, R¹ und R³ gleichzeitig oder unabhängig voneinander gleich Methyl oder Ethyl, und R² gleichzeitig oder unabhängig voneinander gleich Methyl oder Propyl, bedeuten.

4. Alkoxysilan-funktionalisierte und Allophanat-funktionalisierte Urethane nach mindestens einem der vorherigen Ansprüche, wobei n gleich 0 und R² gleich Methyl oder Propyl, und R¹ gleich Methyl oder Ethyl und R³ = R¹ bedeuten.

5. Alkoxysilan-funktionalisierte und Allophanat-funktionalisierte Urethane nach mindestens einem der vorherigen Ansprüche, wobei n gleich 0, R¹ und R³ gleich Methyl und R² gleich Propyl bedeuten.

6. Alkoxysilan-funktionalisierte und Allophanat-funktionalisierte Urethane nach mindestens einem der vorherigen Ansprüche, wobei Diisocyanate B) ausgewählt aus Isophorondiisocyanat (IPDI), Hexamethylendiisocyanat (HDI), 2,2' Dicyclohexylmethandiisocyanat (2,2'-H12MDI), 2,4' Dicyclohexylmethandiisocyanat (2,4'-H12MDI), 4,4' Dicyclohexylmethandiisocyanat (4,4'-H12MDI), 2 Methylpentandiisocyanat (MPDI), Pentandiisocyanat, 2,2,4 Trimethylhexamethylendiisocyanat (2,2,4-TMDI), 2,4,4 Trimethylhexamethylendiisocyanat (2,4,4 TMDI), Norbornandiisocyanat (NBDI), Methylendiphenyldiisocyanat (MDI), Toluidindiisocyanat (TDI), Tetramethylxylylendiisocyanat (TMXDI), Xylylendiisocyanat (MXDI), einzeln oder Mischungen davon, eingesetzt werden.

7. Alkoxysilan-funktionalisierte und Allophanat-funktionalisierte Urethane nach mindestens einem der vorherigen Ansprüche, wobei Diole C) und Polyole C) ausgewählt aus Ethylenglykol, 1,2-, 1,3-Propandiol, Diethylen-, Dipropylen-, Triethylen-, Tetraethylenglykol, 1,2-, 1,4-Butandiol, 1,3-Butylethylpropandiol, 1,3-Methylpropandiol, 1,5-Pentandiol, Bis-(1,4-hydroxymethyl)cyclohexan (Cyclohexandimethanol), Glycerin, Hexandiol, Neopentylglykol, Trimethylolethan, Trimethylolpropan, Pentaerythrit, Bisphenol A, B, C, F, Norbornylenglykol, 1,4-Benzyldimethanol, -ethanol, 2,4-Dimethyl-2-ethylhexan-1,3-diol, 1,4- und 2,3-Butylenglykol, Di-β-hydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.0^{2,6}]decan (Dicidol), 2,2-Bis-(4-hydroxycyclohexyl)propan, 2,2-Bis-[4-(β-hydroxyethoxy)-phenyl]propan, 2-Methyl-propandiol-1,3, 2-Methylpentandiol-1,5, 2,2,4(2,4,4)-Trimethylhexandiol-1,6, Hexantriol-1,2,6, Butantriol-1,2,4, Tris-(β-hydroxyethyl)isocyanurat, Mannit, Sorbit, Polypropylenglykole, Polybutylenglykole, Xylylenglykol oder Hydroxypivalinsäureneopentylglykolester, allein oder in Mischungen, eingesetzt werden.

8. Alkoxysilan-funktionalisierte und Allophanat-funktionalisierte Urethane nach Anspruch 1-6, wobei Diole C) und Polyole C) ausgewählt aus Ethylenglykol, Triethylenglykol,1,4-Butandiol, 1,2-Propandiol, 1,5-Pentandiol, 1,6-Hexandiol, Cyclohexandimethanol, Decandiol, 1,12-Dodecandiol, 2,2,4-Trimethylhexandiol-1,6, 2,4,4-Trimethylhexandiol-1,6, 2,2-Dimethylbutandiol-1,3, 2-Methyl-pentandiol-2,4, 3-Methyl-pentandiol-2,4, 2,2,4-Trimethyl-pentandiol-1,3, 2-Ethylhexandiol-1,3, 2,2-Dimethylhexandiol-1,3, 3-Methylpentandiol-1,5, 2-Methyl-pentandiol-1,5, Trimethylolpropan, 2,2-Dimethylpropandiol-1,3 (Neopentylglykol), Hydroxypivalinsäureneopentylglykolester und cis/trans-1,4-Cyclohexandiol, allein oder in Mischungen, eingesetzt werden.

9. Alkoxysilan-funktionalisierte und Allophanat-funktionalisierte Urethane nach Anspruch 1-6, wobei Diole C) und Polyole C) ausgewählt aus 1,5-Pentandiol, 1,6-Hexandiol, 1,12-Dodecandiol, 2,2,4-Trimethylhexandiol-1,6, 2,4,4-Trimethylhexandiol-1,6, 2,2-Dimethylbutandiol-1,3, 2-Methyl-pentandiol-2,4, 3-Methyl-pentandiol-2,4, 2,2,4-Trimethyl-pentandiol-1,3, 2-Ethylhexandiol-1,3, 2,2-Dimethylhexandiol-1,3, 3-Methylpentandiol-1,5, 2-Methyl-pentandiol-1,5, 2,2-Dimethylpropandiol-1,3 (Neopentylglykol) und cis/trans-1,4-Cyclohexandiol, allein oder in Mischungen, eingesetzt werden.

10. Alkoxysilan-funktionalisierte und Allophanat-funktionalisierte Urethane nach mindestens einem der vorherigen Ansprüche, **dadurch gekennzeichnet, dass** als Diole C) und Polyole C) hydroxylgruppenhaltige Polyester, Polyether, Polyacrylate, Polycarbonate und Polyurethane mit einer OH-Zahl von 20 bis 500 mg KOH/g und einer mittleren Molmasse von 250 bis 6000 g/Mol, allein oder in Mischungen, eingesetzt werden.

11. Alkoxysilan-funktionalisierte und Allophanat-funktionalisierte Urethane nach mindestens einem der vorherigen Ansprüche, **dadurch gekennzeichnet, dass** als Diole C) und Polyole C) hydroxylgruppenhaltige Polyester oder Polyacrylate mit einer OH-Zahl von 50 bis 250 mg KOH/g und einem mittleren Molekulargewicht von 500 bis 6000 g/mol , allein oder in Mischungen, eingesetzt werden.

12. Alkoxysilan-funktionalisierte und Allophanat-funktionalisierte Urethane nach mindestens einem der vorherigen Ansprüche **dadurch gekennzeichnet, dass** als Katalysator K) Metallcarboxylate, tert.-Amine, Amidine Guanidine, quarternäre Ammoniumsalze, Tetralkylammoniumsalze, quarternäre Phosphoniumsalze, Metallacetylacetonate quarternäre Ammoniumacetylacetonate quarternäre Phosphoniumacetylacetonate, Carbonsäuren, Aluminium-, Zirkon-, Titan- und/oder Bor-Alkoholate und/oder Ester davon, phosphor- und stickstoff-haltiger Katalysator, Sulfonsäuren, allein oder in Mischungen, eingesetzt werden.

13. Alkoxysilan-funktionalisierte und Allophanat-funktionalisierte Urethane nach mindestens einem der vorherigen Ansprüche **dadurch gekennzeichnet, dass** als Katalysator K) Zinkacetylacetonat und/oder Zinkethylhexanoat eingesetzt wird.

14. Verfahren zur Herstellung von Alkoxysilan-funktionalisierten und Allophanat-funktionalisierten Urethanen nach mindestens einem der vorherigen Ansprüche, durch Umsetzung von
I.
A) Alkoxysilangruppen haltige Monourethane A) der Formel 1
Rₙ(OR¹)₃₋ₙSi-R²-NH-(C=O)-OR³ Formel 1
wobei Rₙ, R¹, R² und R³ unabhängig voneinander Kohlenwasserstoffreste mit 1-8 C-Atomen bedeuten, wobei diese linear, verzweigt oder cyclisch sein können, oder auch cyclisch ineinander übergehen können, und n gleich 0-2 bedeutet,
und
B) mindestens einem Diisocyanat B),
in einem Mol-Verhältnis von A) zu B) von 1,0 : 1,5 bis 1,0 : 0,6, bevorzugt 1,15 :1 bis 0,85 :1,
besonders bevorzugt von 1:1
optional in Gegenwart mindestens eines Katalysators K),
**II.** und der anschließenden Umsetzung
C) mit mindestens einem Diol und/oder Polyol C),
optional in Gegenwart mindestens eines Katalysators K),
im Verhältnis der NCO-Gruppen des Reaktionsprodukts I. zu den OH-Gruppen des Diols und/oder Polyols II. C) von 1,0 : 1,5 bis 1,0 : 0,6, bevorzugt 1,15 : 1 bis 0,85 : 1, besonders bevorzugt 1 : 1,

15. Verfahren nach Anspruch 14, wobei die Reaktion von Schritt I. oder II. bei Temperaturen im Bereich von 15 bis 40 °C, insbesondere im Bereich von 15 bis 25 °C, durchgeführt wird.

16. Verfahren nach Anspruch 14, wobei die Reaktion von Schritt I. oder II. bei Temperaturen im Bereich von 80 bis 220 °C, insbesondere im Bereich von 80 bis 120 °C durchgeführt wird.

17. Verfahren nach Anspruch 14-16, wobei, die Reaktion von Schritt I. in Gegenwart von Zinkacetylacetonat und/oder Zinkethylhexanoat als Katalysator K) durchgeführt wird.

18. Verfahren nach Anspruch 14-17, wobei die Umsetzung der Restmenge an NCO-Gruppen aus B) mit einem Alkohol D) bei Temperaturen im Bereich 30 - 150 °C, insbesondere im Bereich von 50 - 150 °C, durchgeführt wird.

19. Verfahren nach Anspruch 14-18, wobei die verbleibenden NCO-Gruppen des Reaktionsprodukts I. mit den OH-Gruppen des Diols und/oder Polyols II. C) im Verhältnis NCO-Gruppen zu OH-Gruppen von 0,8 : 1 bis 1,2 : 1, bevorzugt von 0,9 : 1 bis 1,1 : 1 umgesetzt werden, besonders bevorzugt durch stöchiometrische Umsetzung im Verhältnis von 1 : 1.

20. Beschichtungsmittel, Klebstoffe oder Dichtstoffe, enthaltend:
Alkoxysilan-funktionalisierte und Allophanat-funktionalisierte Urethane
enthaltend das Reaktionsproduktes aus
**I.**
A) Alkoxysilangruppen haltige Monourethane A) der Formel 1
Rₙ(OR¹)₃₋ₙSi-R²-NH-(C=O)-OR³ Formel 1
wobei Rₙ, R¹, R² und R³ unabhängig voneinander Kohlenwasserstoffreste mit 1-8 C-Atomen bedeuten, wobei diese linear, verzweigt oder cyclisch sein können, oder auch cyclisch ineinander übergehen können, und n gleich 0-2 bedeutet,
und
B) mindestens einem Diisocyanat B),
in einem Mol-Verhältnis von A) zu B) von 1,0 : 1,5 bis 1,0 : 0,6, bevorzugt 1,15 : 1 bis 0,85 : 1,
besonders bevorzugt von 1 : 1,
optional in Gegenwart mindestens eines Katalysators K),
**II.** und der anschließenden Umsetzung
C) mit mindestens einem Diol und/oder Polyol C),
optional in Gegenwart mindestens eines Katalysators K),
im Verhältnis der NCO-Gruppen des Reaktionsprodukts I. zu den OH-Gruppen des Diols und/oder Polyols II. C) von 1,0 : 1,5 bis 1,0 : 0,6, bevorzugt 1,15 : 1 bis 0,85 : 1, besonders bevorzugt 1 : 1.

21. Verwendung der Alkoxysilan-funktionalisierten und Allophanat-funktionalisierten Urethane nach mindestens einem der vorherigen Ansprüche in Beschichtungszusammensetzungen und Lackzusammensetzungen für Metall-, Glas, Kunststoff-, Holz-, MDF- (Middle Density Fiber Boards) oder Ledersubstrate oder sonstigen hitzeresistenten Untergründen.

22. Verwendung der Alkoxysilan-funktionalisierten und Allophanat-funktionalisierten Urethane nach mindestens einem der vorherigen Ansprüche in Klebstoffzusammensetzungen für Verklebungen von Metall-, Kunststoff-, Glas-, Holz-, MDF- oder Ledersubstraten oder sonstigen hitzeresistenten Untergründen.

## Claims

1. Alkoxysilane-functionalized and allophanate-functionalized urethanes
comprising the reaction product of
**I.**
A) alkoxysilane group-containing monourethanes A) of the formula 1
Rₙ(OR¹)₃₋ₙSi-R²-NH-(C=O)-OR³ formula 1
where Rₙ, R₁, R² and R³ are each independently hydrocarbyl radicals having 1-8 carbon atoms, which may be linear, branched or cyclic, or else may be integrated together to form a cyclic system, and n is 0-2,
and
B) at least one diisocyanate B),
in a molar ratio of A) to B) of from 1.0:1.5 to 1.0:0.6, preferably 1.15:1 to 0.85:1,
particularly preferably 1:1,
optionally in the presence of at least one catalyst K),
**II.** and the subsequent reaction
C) with at least one diol and/or polyol C),
optionally in the presence of at least one catalyst K),
in the ratio of the NCO groups of reaction product I. to the OH groups of the diol and/or polyol II. C) of from 1.0:1.5 to 1.0:0.6, preferably 1.15:1 to 0.85:1, particularly preferably 1:1.

2. Alkoxysilane-functionalized and allophanate-functionalized urethanes according to Claim 1, wherein Rₙ, R¹, R² and R³ are at the same time or each independently methyl, ethyl, n-propyl, isopropyl, n-butyl, sec-butyl or tert-butyl.

3. Alkoxysilane-functionalized and allophanate-functionalized urethanes according to at least one of the preceding claims, wherein n is 0, R¹ and R³ are at the same time or each independently methyl or ethyl, and R² is at the same time or each independently methyl or propyl.

4. Alkoxysilane-functionalized and allophanate-functionalized urethanes according to at least one of the preceding claims, wherein n is 0 and R² is methyl or propyl, and R¹ is methyl or ethyl and R³ = R¹.

5. Alkoxysilane-functionalized and allophanate-functionalized urethanes according to at least one of the preceding claims, wherein n is 0, R¹ and R³ are methyl and R² is propyl.

6. Alkoxysilane-functionalized and allophanate-functionalized urethanes according to at least one of the preceding claims, wherein diisocyanates B) used are selected from isophorone diisocyanate (IPDI), hexamethylene diisocyanate (HDI), 2,2'- dicyclohexylmethane diisocyanate (2,2'-H12MDI), 2,4'- dicyclohexylmethane diisocyanate (2,4'-H12MDI), 4,4'- dicyclohexylmethane diisocyanate (4,4'-H12MDI), 2- methylpentane diisocyanate (MPDI), pentane diisocyanate, 2,2,4-trimethylhexamethylene diisocyanate (2,2,4-TMDI), 2,4,4-trimethylhexamethylene diisocyanate (2,4,4-TMDI), norbornane diisocyanate (NBDI), methylenediphenyl diisocyanate (MDI), toluidine diisocyanate (TDI), tetramethylxylylene diisocyanate (TMXDI), xylylene diisocyanate (MXDI), individually or mixtures thereof.

7. Alkoxysilane-functionalized and allophanate-functionalized urethanes according to at least one of the preceding claims, wherein diols C) and polyols C) used are selected from ethylene glycol, propane-1,2-diol, propane-1,3-diol, diethylene glycol, dipropylene glycol, triethylene glycol, tetraethylene glycol, butane-1,2-diol, butane-1,4-diol, butylethylpropane-1,3-diol, methylpropane-1,3-diol, pentane-1,5-diol, bis(1,4-hydroxymethyl)cyclohexane (cyclohexanedimethanol), glycerol, hexanediol, neopentyl glycol, trimethylolethane, trimethylolpropane, pentaerythritol, bisphenol A, bisphenol B, bisphenol C, bisphenol F, norbornylene glycol, 1,4-benzyldimethanol, 1,4-benzyldiethanol, 2,4-dimethyl-2-ethylhexane-1,3-diol, 1,4-butylene glycol, 2,3-butylene glycol, di-β-hydroxyethylbutanediol, pentane-1,5-diol, hexane-1,6-diol, octane-1,8-diol, decanediol, dodecanediol, neopentyl glycol, cyclohexanediol, 3(4),8(9)-bis(hydroxymethyl)tricyclo[5.2.1.0^{2,6}]decane (dicidol), 2,2-bis(4-hydroxycyclohexyl)propane, 2,2-bis[4-(β-hydroxyethoxy)phenyl]propane, 2-methylpropane-1,3-diol, 2-methylpentane-1,5-diol, 2,2,4(2,4,4)-trimethylhexane-1,6-diol, hexane-1,2,6-triol, butane-1,2,4-triol, tris(β-hydroxyethyl) isocyanurate, mannitol, sorbitol, polypropylene glycols, polybutylene glycols, xylylene glycol or neopentyl glycol hydroxypivalate, alone or in mixtures.

8. Alkoxysilane-functionalized and allophanate-functionalized urethanes according to Claims 1-6, wherein diols C) and polyols C) used are selected from ethylene glycol, triethylene glycol, butane-1,4-diol, propane-1,2-diol, pentane-1,5-diol, hexane-1,6-diol, cyclohexanedimethanol, decanediol, dodecane-1,12-diol, 2,2,4-trimethylhexane-1,6-diol, 2,4,4-trimethylhexane-1,6-diol, 2,2-dimethylbutane-1,3-diol, 2-methylpentane-2,4-diol, 3-methylpentane-2,4-diol, 2,2,4-trimethylpentane-1,3-diol, 2-ethylhexane-1,3-diol, 2,2-dimethylhexane-1,3-diol, 3-methylpentane-1,5-diol, 2-methylpentane-1,5-diol, trimethylolpropane, 2,2-dimethylpropane-1,3-diol (neopentyl glycol), neopentyl glycol hydroxypivalate and cis/trans-cyclohexane-1,4-diol, alone or in mixtures.

9. Alkoxysilane-functionalized and allophanate-functionalized urethanes according to Claims 1-6, wherein diols C) and polyols C) used are selected from pentane-1,5-diol, hexane-1,6-diol, dodecane-1,12-diol, 2,2,4-trimethylhexane-1,6-diol, 2,4,4-trimethylhexane-1,6-diol, 2,2-dimethylbutane-1,3-diol, 2-methylpentane-2,4-diol, 3-methylpentane-2,4-diol, 2,2,4-trimethylpentane-1,3-diol, 2-ethylhexane-1,3-diol, 2,2-dimethylhexane-1,3-diol, 3-methylpentane-1,5-diol, 2-methylpentane-1,5-diol, 2,2-dimethylpropane-1,3-diol (neopentyl glycol) and cis/trans-cyclohexane-1,4-diol, alone or in mixtures.

10. Alkoxysilane-functionalized and allophanate-functionalized urethanes according to at least one of the preceding claims, **characterized in that** hydroxyl group-containing polyesters, polyethers, polyacrylates, polycarbonates and polyurethanes having an OH number of 20 to 500 mg KOH/g and a mean molar mass of 250 to 6000 g/mol are used alone or in mixtures as diols C) and polyols C).

11. Alkoxysilane-functionalized and allophanate-functionalized urethanes according to at least one of the preceding claims, **characterized in that** hydroxyl group-containing polyesters or polyacrylates having an OH number of 50 to 250 mg KOH/g and a mean molecular weight of 500 to 6000 g/mol are used alone or in mixtures as diols C) and polyols C).

12. Alkoxysilane-functionalized and allophanate-functionalized urethanes according to at least one of the preceding claims, **characterized in that** metal carboxylates, tert-amines, amidines, guanidines, quaternary ammonium salts, tetraalkylammonium salts, quaternary phosphonium salts, metal acetylacetonates, quaternary ammonium acetylacetonates, quaternary phosphonium acetylacetonates, carboxylic acids, aluminium alkoxides, zirconium alkoxides, titanium alkoxides and/or boron alkoxides and/or esters thereof, phosphorus- and nitrogen-containing catalyst, sulphonic acids, are used alone or in mixtures as catalyst K).

13. Alkoxysilane-functionalized and allophanate-functionalized urethanes according to at least one of the preceding claims, **characterized in that** zinc acetylacetonate and/or zinc ethylhexanoate is used as catalyst K).

14. Method for preparing alkoxysilane-functionalized and allophanate-functionalized urethanes according to at least one of the preceding claims, by reacting
**I.**
A) alkoxysilane group-containing monourethanes A) of the formula 1
Rₙ(OR¹)₃₋ₙSi-R²-NH-(C=O)-OR³ formula 1
wherein Rₙ, R¹, R² and R³ are each independently hydrocarbyl radicals having 1-8 carbon atoms, which may be linear, branched or cyclic, or else may be integrated together to form a cyclic system, and n is 0-2,
and
B) at least one diisocyanate B),
in a molar ratio of A) to B) of from 1.0:1.5 to 1.0:0.6, preferably 1.15:1 to 0.85:1,
particularly preferably 1:1
optionally in the presence of at least one catalyst K),
**II.** and the subsequent reaction
C) with at least one diol and/or polyol C),
optionally in the presence of at least one catalyst K),
in the ratio of the NCO groups of reaction product I. to the OH groups of the diol and/or polyol II. C) of 1.0:1.5 to 1.0:0.6, preferably 1.15:1 to 0.85:1, particularly preferably 1:1.

15. Method according to Claim 14, wherein the reaction of step I. or II. is carried out at temperatures in the range from 15 to 40°C, especially in the range from 15 to 25°C.

16. Method according to Claim 14, wherein the reaction of step I. or II. is carried out at temperatures in the range from 80 to 220°C, especially in the range from 80 to 120°C.

17. Method according to Claims 14-16, wherein the reaction of step I. is carried out in the presence of zinc acetylacetonate and/or zinc ethylhexanoate as catalyst K).

18. Method according to Claims 14-17, wherein the reaction of the residual amount of NCO groups of B) with an alcohol D) is carried out at temperatures in the range of 30 - 150°C, especially in the range of 50 - 150°C.

19. Method according to Claims 14-18, wherein the remaining NCO groups of reaction product I. are reacted with the OH groups of the diol and/or polyol II. C) in the ratio of NCO groups to OH groups of from 0.8:1 to 1.2:1, preferably from 0.9:1 to 1.1:1, particularly preferably by stoichiometric reaction in the ratio of 1:1.

20. Coating compositions, adhesives or sealants comprising:
alkoxysilane-functionalized and allophanate-functionalized urethanes
comprising the reaction product of
**I.**
A) alkoxysilane group-containing monourethanes A) of the formula 1
Rₙ(OR¹)₃₋ₙSi-R²-NH-(C=O)-OR³ formula 1
wherein Rₙ, R¹, R² and R³ are each independently hydrocarbyl radicals having 1-8 carbon atoms, which may be linear, branched or cyclic, or else may be integrated together to form a cyclic system, and n is 0-2,
and
B) at least one diisocyanate B),
in a molar ratio of A) to B) of from 1.0:1.5 to 1.0:0.6, preferably 1.15:1 to 0.85:1,
particularly preferably 1:1,
optionally in the presence of at least one catalyst K),
**II.** and the subsequent reaction
C) with at least one diol and/or polyol C),
optionally in the presence of at least one catalyst K),
in the ratio of the NCO groups of reaction product I. to the OH groups of the diol and/or polyol II. C) of 1.0:1.5 to 1.0:0.6, preferably 1.15:1 to 0.85:1, particularly preferably 1:1.

21. Use of the alkoxysilane-functionalized and allophanate-functionalized urethanes according to at least one of the preceding claims in coating compositions and paint compositions for metal, glass, plastic, wood, MDF (Middle Density Fibreboards) or leather substrates or other heat-resistant substrates.

22. Use of the alkoxysilane-functionalized and allophanate-functionalized urethanes according to at least one of the preceding claims in adhesive compositions for bonding of metal, plastic, glass, wood, MDF or leather substrates or other heat-resistant substrates.

## Revendications

1. Uréthanes fonctionnalisés par alcoxysilane et fonctionnalisés par allophanate, contenant le produit de réaction
I.
A) de mono-uréthanes A) contenant des groupes alcoxysilane de formule 1 :
Rₙ(OR¹)₃₋ₙSi-R²-NH-(C=O)-OR³ Formule 1
dans laquelle Rₙ, R¹, R² et R³ représentent, indépendamment les uns des autres, des radicaux hydrocarbonés comprenant 1-8 atomes de carbone, ceux-ci pouvant être linéaires, ramifiés ou cycliques ou également se transformer cycliquement les uns dans les autres, et n vaut 0-2, et
B) d'au moins un diisocyanate B)
dans un rapport molaire de A) à B) de 1,0:1,5 à 1,0:0,6, de préférence de 1,15:1 à 0,85:1, de manière particulièrement préférée de 1:1,
éventuellement en présence d'un catalyseur K),
II. et de la transformation consécutive
C) avec au moins un diol et/ou polyol C), éventuellement en présence d'un catalyseur K),
dans un rapport des groupes NCO du produit de réaction I. aux groupes OH du diol et/ou du polyol II. C) de 1,0:1,5 à 1,0:0,6, de préférence de 1,15:1 à 0,85:1, de manière particulièrement préférée de 1:1.

2. Uréthanes fonctionnalisés par alcoxysilane et fonctionnalisés par allophanate selon la revendication 1, Rₙ, R¹, R² et R³ signifiant, simultanément ou indépendamment les uns des autres, méthyle, éthyle, n-propyle, iso-propyle, n-butyle, sec-butyle ou tert-butyle.

3. Uréthanes fonctionnalisés par alcoxysilane et fonctionnalisés par allophanate selon au moins l'une quelconque des revendications précédentes, n valant 0, R¹ et R³ signifiant, simultanément ou indépendamment l'un de l'autre, méthyle ou éthyle et R² signifiant, simultanément ou indépendamment les uns des autres, méthyle ou propyle.

4. Uréthanes fonctionnalisés par alcoxysilane et fonctionnalisés par allophanate selon au moins l'une quelconque des revendications précédentes, n valant 0, R² signifiant méthyle ou propyle et R¹ signifiant méthyle ou éthyle et R³ = R¹.

5. Uréthanes fonctionnalisés par alcoxysilane et fonctionnalisés par allophanate selon au moins l'une quelconque des revendications précédentes, n valant 0, R¹ et R³ signifiant méthyle et R² signifiant propyle.

6. Uréthanes fonctionnalisés par alcoxysilane et fonctionnalisés par allophanate selon au moins l'une quelconque des revendications précédentes, des diisocyanates B) choisis parmi le diisocyanate d'isophorone (IPDI), le diisocyanate d'hexaméthylène (HDI), le diisocyanate de 2,2'-dicyclohexylméthane (2,2'-H12MDI), le diisocyanate de 2,4'-dicyclohexylméthane (2,4'-H12MDI), le diisocyanate de 4,4'-dicyclohexylméthane (4,4'-H12MDI), le diisocyanate de 2-méthylpentane (MPDI), le diisocyanate de pentane, le diisocyanate de 2,2,4-triméthylhexaméthylène (2,2,4-TMDI), le diisocyanate de 2,4,4-triméthylhexaméthylène (2,4,4-TMDI), le diisocyanate de norbornane (NBDI), le diisocyanate de méthylènediphényle (MDI), le diisocyanate de toluidine (TDI), le diisocyanate de tétraméthylxylylène (TMXDI), le diisocyanate de xylylène (MXDI), seuls ou sous forme de mélanges de ceux-ci, étant utilisés.

7. Uréthanes fonctionnalisés par alcoxysilane et fonctionnalisés par allophanate selon au moins l'une quelconque des revendications précédentes, des diols C) et des polyols C) choisis parmi l'éthylèneglycol, le 1,2-propanediol, le 1,3-propanediol, le diéthylèneglycol, le dipropylèneglycol, le triéthylèneglycol, le tétraéthylèneglycol, le 1,2-butanediol, le 1,4-butanediol, le 1,3-butyléthylpropanediol, le 1,3-méthylpropanediol, le 1,5-pentanediol, le bis-(1,4-hydroxyméthyl)cyclohexane (cyclohexanediméthanol), le glycérol, l'hexanediol, le néopentylglycol, le triméthyloléthane, le triméthylolpropane, le pentaérythritol, le bisphénol A, le bisphénol B, le bisphénol C, le bisphénol F, le norbornylèneglycol, le 1,4-benzyldiméthanol, le 1,4-benzyldiéthanol, le 2,4-diméthyl-2-éthylhexane-1,3-diol, le 1,4-butylèneglycol et le 2,3-butylèneglycol, di-β-hydroxyéthylbutanediol, le 1,5-pentanediol, le 1,6-hexanediol, le 1,8-octanediol, le décanediol, le dodécanediol, le néopentylglycol, le cyclohexanediol, le 3(4),8(9)-bis(hydroxyméthyl)-tricyclo[5.2.1.02,6]décane (Dicidol), le 2,2-bis-(4-hydroxycyclohexyl)propane, le 2,2-bis-[4-(-β-hydroxyéthoxy)-phényl]propane, le 2-méthylpropanediol-1,3, le 2-méthylpentanediol-1,5, le 2,2,4(2,4,4)-triméthylhexanediol-1,6, l'hexanetriol-1,2,6, le butanetriol-1,2,4, l'isocyanurate de tris-(B-hydroxyéthyle), le mannitol, le sorbitol, les polypropylèneglycols, les polybutylèneglycols, le xylylèneglycol ou l'ester néopentylglycolique de l'acide hydroxypivalique, seuls ou sous forme de mélanges, étant utilisés.

8. Uréthanes fonctionnalisés par alcoxysilane et fonctionnalisés par allophanate selon la revendication 1-6, des diols C) et des polyols C) choisis parmi l'éthylèneglycol, le triéthylèneglycol, le 1,4-butanediol, le 1,2-propanediol, le 1,5-pentanediol, le 1,6-hexanediol, le cyclohexanediméthanol, le décanediol, le 1,12-dodécanediol, le 2,2,4-triméthylhexanediol-1,6, le 2,4,4-triméthylhexanediol-1,6, le 2,2-diméthylbutanediol-1,3, le 2-méthylpentanediol-2,4, le 3-méthylpentanediol-2,4, le 2,2,4-triméthylpentanediol-1,3, le 2-éthylhexanediol-1,3, le 2,2-diméthylhexanediol-1,3, le 3-méthylpentanediol-1,5, le 2-méthylpentanediol-1,5, le triméthylolpropane, le 2,2-diméthylpropanediol-1,3 (néopentylglycol), l'ester néopentylglycolique de l'acide hydroxypivalique et le cis/trans-1,4-cyclohexanediol, seuls ou sous forme de mélanges, étant utilisés.

9. Uréthanes fonctionnalisés par alcoxysilane et fonctionnalisés par allophanate selon la revendication 1-6, des diols C) et des polyols C) choisis parmi le 1,5-pentanediol, le 1,6-hexanediol, le 1,12-dodécanediol, le 2,2,4-triméthylhexanediol-1,6, le 2,4,4-triméthylhexanediol-1,6, le 2,2-diméthylbutanediol-1,3, le 2-méthylpentanediol-2,4, le 3-méthylpentanediol-2,4, le 2,2,4-triméthylpentanediol-1,3, le 2-éthylhexanediol-1,3, le 2,2-diméthylhexanediol-1,3, le 3-méthylpentanediol-1,5, le 2-méthylpentanediol-1,5, le 2,2-diméthylpropanediol-1,3 (néopentylglycol) et le cis/trans-1,4-cyclohexanediol, seuls ou sous forme de mélanges, étant utilisés.

10. Uréthanes fonctionnalisés par alcoxysilane et fonctionnalisés par allophanate selon au moins l'une quelconque des revendications précédentes, **caractérisés en ce qu'**on utilise, comme diols C) et polyols C), des polyesters, des polyéthers, des polyacrylates, des polycarbonates et des polyuréthanes, contenant des groupes hydroxyle, présentant un indice d'OH de 20 à 500 mg de KOH/g et une masse molaire moyenne de 250 à 6000 g/mole, seuls ou sous forme de mélanges.

11. Uréthanes fonctionnalisés par alcoxysilane et fonctionnalisés par allophanate selon au moins l'une quelconque des revendications précédentes, caractérisés qu'on utilise, comme diols C) et polyols C), des polyesters ou des polyacrylates, contenant des groupes hydroxyle, présentant un indice d'OH de 50 à 250 mg de KOH/g et un poids moléculaire moyen de 500 à 6000 g/mole, seuls ou sous forme de mélanges.

12. Uréthanes fonctionnalisés par alcoxysilane et fonctionnalisés par allophanate selon au moins l'une quelconque des revendications précédentes, **caractérisés en ce qu'**on utilise, comme catalyseur K), des carboxylates métalliques, des tert-amines, des amidines, des guanidines, des sels d'ammonium quaternaire, des sels de tétraalkylammonium, des sels de phosphonium quaternaire, des acétylacétonates métalliques, des acétylacétonates d'ammonium quaternaire, des acétylacétonates de phosphonium quaternaire, des acides carboxyliques, des alcoolates d'aluminium, de zirconium, de titane et/ou de bore et/ou des esters de ceux-ci, un catalyseur contenant du phosphore et de l'azote, des acides sulfoniques, seuls ou en mélange.

13. Uréthanes fonctionnalisés par alcoxysilane et fonctionnalisés par allophanate selon au moins l'une quelconque des revendications précédentes, **caractérisés en ce qu'**on utilise, comme catalyseur K), de l'acétylacétonate de zinc et/ou de l'éthylhexanoate de zinc.

14. Procédé pour la préparation d'uréthanes fonctionnalisés par alcoxysilane et fonctionnalisés par allophanate selon au moins l'une quelconque des revendications précédentes, par transformation
I.
A) de mono-uréthanes A) contenant des groupes alcoxysilane de formule 1 :
Rₙ(OR¹)₃₋ₙSi-R²-NH-(C=O)-OR³ Formule 1
dans laquelle Rₙ, R¹, R² et R³ représentent, indépendamment les uns des autres, des radicaux hydrocarbonés comprenant 1-8 atomes de carbone, ceux-ci pouvant être linéaires, ramifiés ou cycliques ou également se transformer cycliquement les uns dans les autres, et n vaut 0-2, et
B) d'au moins un diisocyanate B)
dans un rapport molaire de A) à B) de 1,0:1,5 à 1,0:0,6, de préférence de 1,15:1 à 0,85:1, de manière particulièrement préférée de 1:1,
éventuellement en présence d'un catalyseur K),
II. et par la transformation consécutive
C) avec au moins un diol et/ou polyol C), éventuellement en présence d'un catalyseur K),
dans un rapport des groupes NCO du produit de réaction I. aux groupes OH du diol et/ou du polyol II. C) de 1,0:1,5 à 1,0:0,6, de préférence de 1,15:1 à 0,85:1, de manière particulièrement préférée de 1:1.

15. Procédé selon la revendication 14, la réaction de l'étape I. ou II. étant réalisée à des températures dans la plage de 15 à 40°C, en particulier dans la plage de 15 à 25°C.

16. Procédé selon la revendication 14, la réaction de l'étape I. ou II. étant réalisée à des températures dans la plage de 80 à 220°C, en particulier dans la plage de 80 à 120°C.

17. Procédé selon la revendication 14-16, la réaction de l'étape I. étant réalisée en présence d'acétylacétonate de zinc et/ou d'éthylhexanoate de zinc comme catalyseur K).

18. Procédé selon la revendication 14-17, la transformation de la quantité résiduelle de groupes NCO de B) étant réalisée avec un alcool D) à des températures dans la plage de 30-150°C, en particulier dans la plage de 50-150°C.

19. Procédé selon la revendication 14-18, les groupes résiduels NCO du produit de réaction I. étant transformés avec les groupes OH du diol et/ou du polyol II. C) dans un rapport des groupes NCO aux groupes OH de 0,8:1 à 1,2:1, de préférence de 0,9:1 à 1,1:1, de manière particulièrement préférée par transformation stoechiométrique dans un rapport de 1:1.

20. Agents de revêtement, adhésifs ou matériaux d'étanchéité contenant : des uréthanes fonctionnalisés par alcoxysilane et fonctionnalisés par allophanate contenant le produit de réaction
I
A) de mono-uréthanes A) contenant des groupes alcoxysilane de formule 1 :
Rₙ(OR¹)₃₋ₙSi-R²-NH-(C=O)-OR³ Formule 1
dans laquelle Rₙ, R¹, R² et R³ représentent, indépendamment les uns des autres, des radicaux hydrocarbonés comprenant 1-8 atomes de carbone, ceux-ci pouvant être linéaires, ramifiés ou cycliques ou également se transformer cycliquement les uns dans les autres, et n vaut 0-2, et
B) d'au moins un diisocyanate B)
dans un rapport molaire de A) à B) de 1,0:1,5 à 1,0:0,6, de préférence de 1,15:1 à 0,85:1, de manière particulièrement préférée de 1:1,
éventuellement en présence d'un catalyseur K),
II. et de la transformation consécutive
C) avec au moins un diol et/ou polyol C),
éventuellement en présence d'un catalyseur K),
dans un rapport des groupes NCO du produit de réaction I. aux groupes OH du diol et/ou du polyol II. C) de 1,0:1,5 à 1,0:0,6, de préférence de 1,15:1 à 0,85:1, de manière particulièrement préférée de 1:1.

21. Utilisation des uréthanes fonctionnalisés par alcoxysilane et fonctionnalisés par allophanate selon au moins l'une quelconque des revendications précédentes dans des compositions de revêtement et des compositions de laque pour des substrats métalliques, en verre, en matériaux synthétiques, en bois, en MDF (Middle Density Fiber Boards) ou en cuir ou pour d'autres substrats résistant la chaleur

22. Utilisation des uréthanes fonctionnalisés par alcoxysilane et fonctionnalisés par allophanate selon au moins l'une quelconque des revendications précédentes dans des compositions adhésives pour des collages de substrats métalliques, en matériaux synthétiques, en verre, en bois, en MDF ou en cuir ou d'autres substrats résistant la chaleur
